# EUROPEAN PATENT APPLICATION

(11) **EP 1 313 009 A2**
(43) Date of publication of application: **21.05.2003**
(21) Application number: 02024615.3
(22) Date of filing: 04.11.2002
(51) Int. Cl.: G06F 9/44

(54) **Remote softwareinitialization**

(30) Priority: 16.11.2001 US 991096
(71) Applicant: Gateway, Inc., North Sioux City, South Dakota 57049 (US)
(72) Inventor: Sawyer, Michael, Sioux City, IA 51106 (US)
(74) Representative: Viering, Jentschura & Partner

(57) **Abstract**

The present invention is directed to a system, and method for remotely determining a user's out-of-box experience with a information handling system or a software program. The present invention discloses providing an information handling system with the capability of detecting data relating to how the user interacts with the information handling system during initialization. User interaction data may include detecting occurrence of event, time intervals, installation of devices. Data may then be compiled and uploaded over a network, such as the Internet to a remote information handling system or web site.

## Description

### FIELD OF THE INVENTION

The present invention generally relates to the field of information handling systems, and particularly to a remote method and system for determining a user's out-of-box experience.

### BACKGROUND OF THE INVENTION

Presently, information handling systems are provided to consumers in a disassembled state. Typically, consumers may wish to set-up information handling systems themselves due to high costs and scheduling problems associated with having a technician complete installation.

To set-up an information handling system, the user may physically remove the information handling system from packaging, connect the physical components and then initiate start-up procedures. The out-of-box experience (OOBE) may refer to the process of establishing an information handling system or software program into an operating state.

The OOBE provides insightful information because it is typically, one of the first interactions between the user and the information handling system, therefore the user may form opinions based on this experience. The user's opinions may carry over to their overall impression of the information handling system, the advice they convey to associates, and to future purchases they may make. Furthermore, difficulties occurring during the out-of-box process may trigger a help-line call which may lead to user anxiety and require costly help-line staffing.

To alleviate out-of-box problems and to make the OOBE as user friendly as possible, manufacturers may conduct tests to ensure as much user satisfaction as is practical. Testing may involve determining the ease with which an information handling system may be removed from packaging and assembled as well as how a user interacts with the information handling system during initialization.

Typically, engineers perform tests to gauge how a typical user may interact with the information handling system. Simulated start-up tests may offer insight into how a user interacts with the information handling system but such tests fail to accurately represent user OOBE. Difficulties with simulated testing include the advanced knowledge of such engineers, problems in simulating actual conditions and possible user emotions involved as the user sets-up the information handling system.

Furthermore, simulated testing by engineers may not give insight into the demographic information of the users setting up the information handling system. For example the user's education, age, experience with technology and the like may be beyond simulated testing.

Therefore, it would be desirable to provide a system and method capable of efficiently determining a user's OOBE.

### SUMMARY OF THE INVENTION

Accordingly, the present invention is directed to a system and method for remotely determining a user's OOBE. The remote OOBE determination system may include a user information handling system capable of detecting data related to the user's out-of-box interaction with the user information handling system. User interaction data may include an occurrence of an event, a time period, and the like. OOBE determination may include the initialization period of an information handling system or a software system. OOBE determination may continue for a set time period until the user has established the user information handling system into an operating state.

In the first embodiment the OOBE determining capability may be run as a background application so as to be unobservable to the user. In the present embodiment, a network may be connected to the user information handling system. The network may be suitable for communicating uploaded data from the user information handling system.

A remote information handling system may be connected to the network. The remote information handling system may be suitable for receiving the uploaded data communicated over the network.

In a second embodiment a method for remotely determining a user's OOBE is disclosed. Initially, remote user OOBE determination may begin by providing a user's information handling system with the capability to detect data related to the user's interactions with the user information handling system. One embodiment providing OOBE-determining capability includes a manufacturer pre-loading the OOBE-determining capability.

Once the user information handling system is provided with OOBE-determining capability, the user may initialize the user information handling system. Initializing the user information handling system may continue until an operating state has been reached.

During initialization, data relating to how the user interacts with the user information handling system may be detected. User interaction data may include how long a dialog box is open, the amount of time between events, and the like. The user interaction data may compiled for subsequent uploading over a network.

The compiled user interaction data may be uploaded as part of an electronic mail message, uploaded via a file transfer protocol for communication to a remote information handling system and the like.

In a third embodiment, OOBE-determining capability is included as part of a software system included on a computer-readable medium. The software system includes a first software package and a second software package. The first software package may be capable of performing a function, such as an accounting function, a word processing function or the like. The second software package may be capable of causing the user information handling system to detect the user's interaction during initialization. Furthermore, the second software package may be capable of causing the user information handling system to upload the user interaction data to a remote information handling system.

It is to be understood that both the forgoing general description and the following detailed description are exemplary and explanatory only and are not restrictive of the invention as claimed. The accompanying drawings, which are incorporated in and constitute a part of the specification, illustrate an embodiment of the invention and together with the general description serve to explain the principles of the invention.

### BRIEF DESCRIPTION OF THE DRAWINGS

The numerous advantages of the present invention may be better understood by those skilled in the art by reference to the accompanying figures in which:

FIG. 1 is a overview illustration of an exemplary embodiment wherein a system for remotely detecting a user's out-of-box experience is shown;

FIG. 2 is a perspective view of a user interacting with a system for remotely determining a user's out of box experience;

FIG. 3 is a flow diagram of a method for remotely determining a user's out-of-box experience; and

FIG. 4 is a flow diagram of a method for remotely determining a user's out-of-box experience including surveying the user and offering an incentive to the user.

### DETAILED DESCRIPTION OF THE INVENTION

Reference will now be made in detail to the presently preferred embodiments of the invention, examples of which are illustrated in the accompanying drawings.

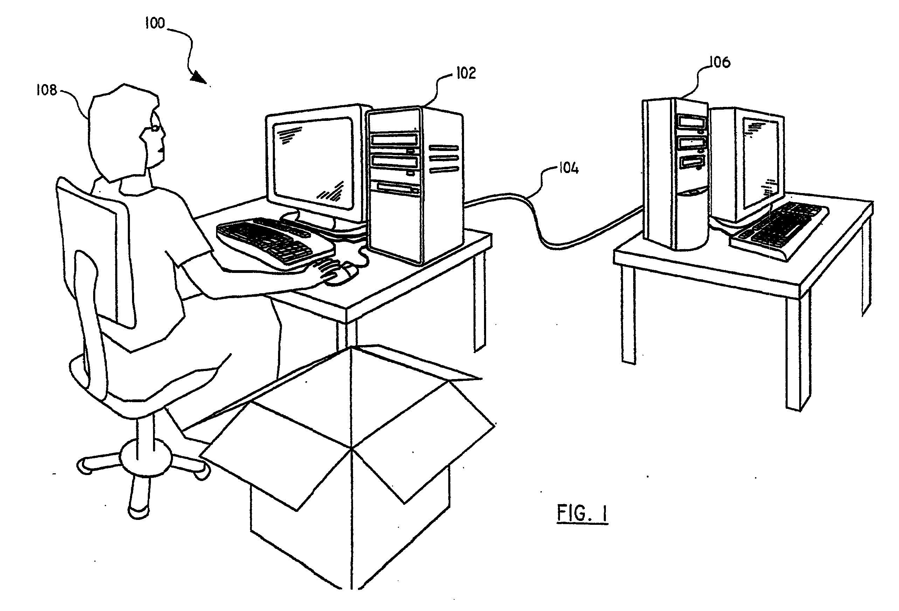

Referring generally now to FIGS. 1 through 4, exemplary embodiments of the present invention are shown wherein a system and method is suitable for remotely detecting data related to a user's out-of-box experience (OOBE). Remote detection of a user's OOBE allows for a more accurate determination of a user's experience with an information handling system. Additionally, costly simulations of a user's OOBE may be avoided through remote OOBE detection.

Referring now to FIG. 1, a system for remotely determining a user's OOBE 100 is shown. In a first embodiment, the remote OOBE system 100 includes a user information handling system 102 capable of detecting data related to how a user 108 interacts with the user information handling system 102. In the present embodiment, the user information handling system 102 is provided with OOBE-determining capability as part of a pre-loaded configuration. In additional embodiments the OOBE-determining capability is provide as part of a software system. Upon setting-up the user information handling system 102, the user 108 may initialize the user information handling system 102, such as by conducting a boot-up.

Once the user information handling system 102 is started, preloaded programs may be executed as part of the initialization process. Programs include operating systems, drivers, run-once programs, such as start-up dialogs and the like.

Additionally, the user information handling system 102 may be capable of detecting data related to how the user 108 interacts with the user information handling system 102. The user interaction data may be detected and compiled as part of an OOBE program run as a background application. The OOBE program may start when the information handling system 102 is initially booted-up. In examples of the present invention the OOBE program is hidden from the user so as to not alert the user of the program's presence. Data related to the user's interaction with the user information handling system 102 may be compiled and subsequently correlated to relate to the user's OOBE.

In additional embodiments, an OOBE-determining capability is included in a software program and impart the user information handling system 102 with the capability to detect and compile data relating to how the user interacts with the user information handling system 102 running the software program. The software system may include a first software program and a second software program. The first software program is capable of performing a function. Examples of first software programs include operating systems, billing programs, word processing programs and the like. It is to be understood that various applications of the present invention are contemplated by one of ordinary skill in the art and it is the intention of the present invention to include and encompass such changes without departing from the spirit and scope of the present invention.

Examples of user interactions include how long a dialog box is open, the amount of time between events, "HELP" button utilization, an occurrence of an event such as an error message, an installation of a driver, an installation of a software program, a mistake by the user, an amount of time between program installation and access, a screen capture and the like.

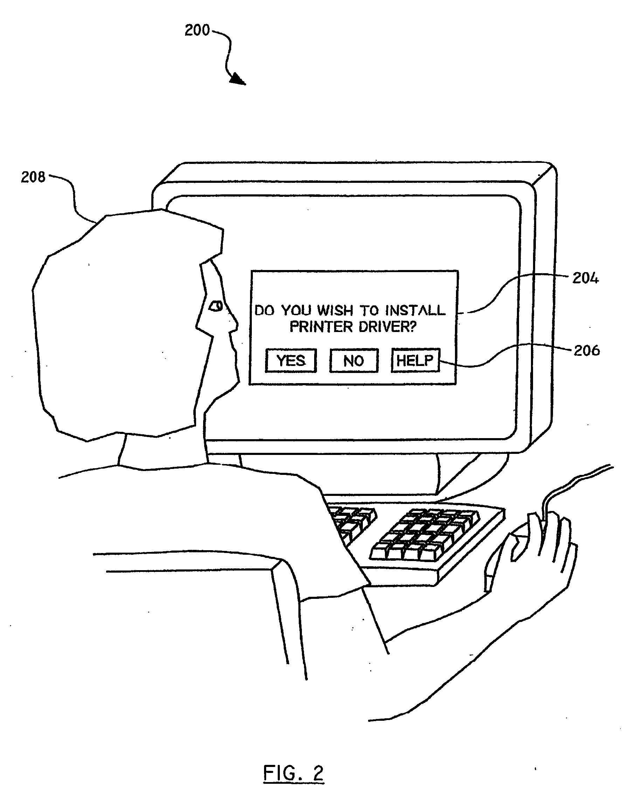

User interaction data may be generated as the user 108 initializes the user information handling system 102 to conform to their specifications. User interaction data may correlate to the user's OOBE. For example, should the user 108 spend an inordinate amount of time with a dialog box open, it is correlated that the user 108 was confused by the message. In the previous example, not only is the amount of time the user 108 spent with the dialog box to open be recorded but a screen capture occurs. Referring now to FIG. 2, a dialog box 204 related to a run-once start-up program prompts a user 208 with a request "Do you wish to install printer driver now?" and selections relating to the affirmative, the negative and a "HELP" button 206. Should the user 208 be confused about what the printer driver message means they may choose to click on the "HELP" button 206. In the present example, user interaction data includes the selection of the "HELP" button, the amount of time before the "HELP" button was selected and subsequently was a printer driver installed successfully.

In reference to FIG. 1, as the user 108 interacts with the user information handling system 102 during the initialization process, user interaction data may be detected and compiled. After a specific time period such as after the initial boot-up, after a specific number of boot operations, a time period, such as a week, a month or the like; the user 108 may be prompted to allow uploading of the user interaction data. The prompt may appear as a dialog box and give the user 108 additional information about the data collected, offer a survey, offer an incentive to allow uploading of data and the like.

In additional embodiments, the uploading of user interaction data occurs automatically. The user 108 may be given an incentive at the time of purchase to allow the automatic uploading of data from the information handling system 102. It is to be understood that various modifications of the present invention are contemplated within the spirit and scope of the present invention and it is the intention to encompass and include such modification.

Referring to FIG 1, connected to the user information handling system 102 may be a network 104. In various embodiments the network is the INTERNET, a dial-up modem and the like. The network 104 is suitable for communicating the uploaded user interaction data relating to the user's OOBE. The uploaded user interaction data is communicated as an attachment to an electronic mail message, sent via a file transfer protocol and the like.

The system for remotely determining a user's OOBE 100 may include a remote information handling system 106. The remote information handling system 106 may be connected to the network 104. For example, the remote information handling system is operated by the manufacturer of the user information handling system, located at the manufacturer's facility in another city or state. In a first embodiment, the remote information handling system 106 is capable of receiving the user interaction data uploaded from the user information handling system through the network 104. In a second embodiment, the remote information handling system 106 is suitable for receiving the user interaction data from a web site connected to the network 104 where user interaction data is temporarily stored.

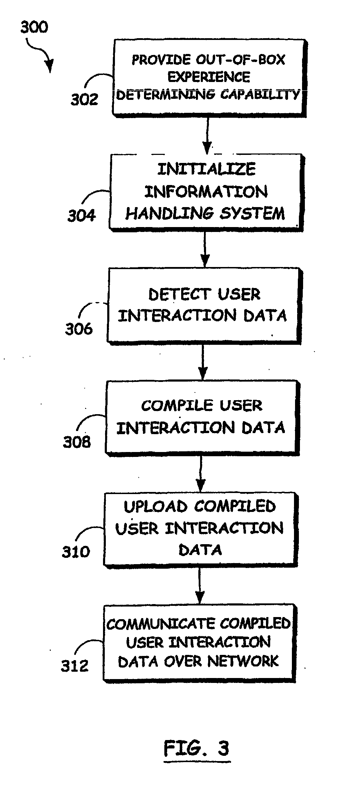

Referring now to FIG. 3, a flow chart of an exemplary method for remotely determining a user's OOBE 300 of the present invention will be discussed. Initially, a user information handling system may be provided with the capability of determining a user's OOBE. The user's OOBE is determined by detecting data related to the user's interaction with the information handling system during initialization. In this embodiment the user information handling system is delivered from a manufacturer with OOBE-determining capability pre-loaded.

In an additional embodiment, providing the user information handling system 302 with OOBE-determining capability is accomplished by including the OOBE capability as part of a software system. In the current embodiment the software system includes a first software program and a second software program. The first software program may be capable of performing a function, such as an accounting program. The second program may include OOBE-determining capabilities for detecting user interactions with an information handling system while the first software program is operating. Moreover, the second software program including OOBE-determining capability may be conducted as a background application. The inclusion of OOBE-determining capability in a software system may be provided to the user information handling system as part of a download, on a computer-readable medium and the like.

Once a user information handling system is provided with OOBE-determining capability, the information handling system may be initialized. In the present embodiment initializing the user information handling system 304 includes performing an initial boot-up operation in the case of a user information handling system provided by a manufacture. Initialization 304 may include setting up the operation of the user information handling system to the user's specification. In additional embodiments, initialization 304 includes starting a software system having an OOBE-determining capability.

After the inception of initialization 304, the user information handling system may begin to detect user interaction data representing how the user interacts with the user information handling system. Detecting user interaction data 306 may include how long a dialog box is open, an amount of time between events, "HELP" button utilization, an occurrence of an event, an installation of a driver, an installation of a software program, a mistake by the user, an amount of time between program installation and access, a screen capture and the like. Moreover, in further embodiments the detection of user interaction data is conducted as a background operation, such as by making detection not readily observable to the user.

Upon detecting user interaction data 306, the user interaction data may be compiled. Compiling user interaction data 308 may include storing the data as a file for subsequent uploading. In various embodiments user interaction data is compiled concurrently with detection, at shut down of the information handling system, at the shut down of a program containing an OOBE-determining capability and the like.

After compellation 308, at a set time, such as after the initial boot-up, after a specific number of boot operations, after a program has been started a specific number of times, a time period, such as a week, a month or the like the user information handling system may upload compiled user interaction data. Uploading user interaction data 310 may include attaching the compiled user interaction data as a file to an electronic mail message, sending the user interaction data as a file transfer protocol file, transferring the user interaction data to an Internet connection and the like.

Once the compiled user interaction data is uploaded 310, the data may be communicated over a network to a remote information handling system. Data may be communicated to a remote location in another city, state or the like. Communicating user information data 312 may include sending an electronic mail message including an attached user interaction data file, sending the user interaction data via a file transfer protocol over a network, and communicating the user interaction data over the INTERNET.

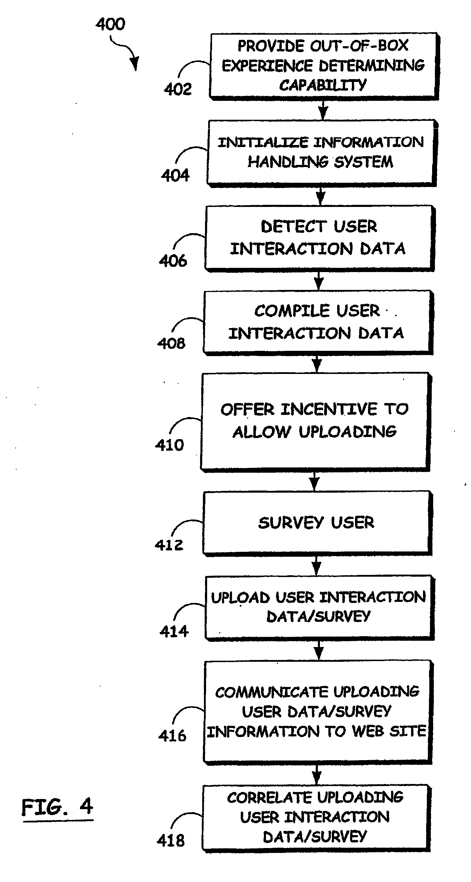

Referring now to FIG. 4, a flow chart of in an exemplary method for remotely determining a user's OOBE 400 is discussed. Initially, a user information handling system is provided with the capability of determining a user's OOBE. The user's OOBE is determined by detecting data related to the user's interaction with the information handling system while the user is initializing the user information handling system. Providing the user information handling system with OOBE determination capability 402 may include pre-loading the OOBE-determining capability by a information handling system manufacturer, originator.

Once the information handling system is provided with OOBE-determining capability 402, the information handling system may be initialized. Initialization 404 activities may include booting-up the information handling system, starting a software system and the like. Furthermore, initialization 404 may continue until an operational state is achieved. For example, a software system's initialization may continue for a set time period or until the user triggers an event such as by exiting a tutorial.

After initialization has started the information handling system may begin to detect user interaction data. Detecting a user's interaction with the user information handling system 406 may include how long a dialog box is open, the amount of time between events, "HELP" button utilization, an occurrence of an event, an installation of a driver, an installation of a software program, a mistake by the user, an amount of time between program installation and access, a screen capture and the like.

Once user interaction data has been detected the information handling system may compile user interaction data into a file for later utilization. Compiling user interaction data 408 may continue for a set time period, until an event has occurred and the like.

Upon the termination of user interaction detection 406 and compilation 408 the user may be offered an incentive. Offering an incentive 410 may include offering the user "cash back", a rebate, an upgrade, an additional service, an additional device and the like. In the present embodiment offering an incentive requires the user to allow subsequent uploading of compiled user interaction data, completing and uploading a survey, uploading a completed survey and user interaction data and the like. In a further embodiment, a purchaser is offered an incentive at purchase to allow automatic uploading, such as a price reduction. Moreover, in an additional embodiment the terms of the license agreement, between the manufacturer or originator, includes a provision requiring automatic uploading.

After detection of user interaction data 406 and compilation 408 is completed the user may be surveyed. Surveying the user 412 may encompass a series of questions designed to elucidate demographic information, user opinions, user comments, set-up information, such as ease of packaging removal, ease-of-device connection, software system loading and the like.

Subsequent to the completion of the survey, the user interaction data and accompanying survey may be uploaded to a network connected to the user information handling system. Uploading 414 may include attaching the compiled user interaction data as a file to an electronic mail message, sending the user interaction data via a file transfer protocol, transferring the user interaction data to an INTERNET connection.

Once uploaded data may be communicated over a network connected to the user information handling system. Communicating data 416 may include transferring at least one of user interaction data and a completed survey over the network. Communicating data 416 may result in the data being communicated to a web site and then transferred to a remote information handling system. In further embodiments, data communication may result in the transfer of data to a remote information handling system.

After the communicated data is received by the remote information handling system, the data may be correlated. Correlating data 418 may include correlating the user interaction data, the user survey, and additional data such as ordering data generated at the time of purchase. In the present embodiment correlation is carried out by the originator, manufacturer of the user information handling system or the like. Furthermore in alternative embodiments the originator of the information handling system utilizes the detected data to modify the initialization process for new information handling systems.

It is believed that the REMOTE OUT-OF-BOX EXPERIENCE of the present invention and many of its attendant advantages will be understood by the foregoing description. It is also believed that it will be apparent that various changes may be made in the form, construction and arrangement of the components thereof without departing from the scope and spirit of the invention or without sacrificing all of its material advantages. The form herein before described being merely an explanatory embodiment thereof. It is the intention of the following claims to encompass and include such changes.

## Claims

1. A system for remotely determining a user's out-of-box experience, comprising:
a user information handling system capable of detecting and uploading data related to the user's out-of-box interaction with the user information handling system;
a network suitable for communicating uploaded data, wherein the network is connected to the user information handling system; and
a remote information handling system connected to the network, wherein the remote information handling system is suitable for receiving uploaded data from the user information handling system.

2. The system of claim 1, wherein the user information handling system is capable of automatically uploading user interaction data.

3. The system of claim 1, wherein the user information handling system is capable of offering an opportunity to upload user interaction data.

4. The system of claim 1, wherein the remote information handling system is capable of correlating the uploaded data with the user information handling system's pre-loaded configuration.

5. The system of claim 1, wherein user interaction data is at least one of an occurrence of an event, a time interval between events, a user input, "HELP" button utilization, a time period to load a program, an accessed program's name, an installation of a driver, a screen capture, a time period a dialog box is open.

6. The system of claim 1, wherein the user information handling system detects user interaction data as a background application.

7. The system of claim 1, wherein the user's interactions are detected for at least one of an initial boot-up, a specific number of boot operations, a time period, and after a program has been started a specific number of times.

8. The system of claim 1, wherein the network is the INTERNET.

9. The system of claim 1, wherein the user information handling system is capable of surveying the user.

10. A system for remotely determining a user's out-of-box experience, comprising:
a user information handling system capable of detecting and uploading data related to the user's out-of-box interaction with the user information handling system during initialization;
a network suitable for communicating uploaded data, wherein the network is connected to the user information handling system; and
a remote information handling system connected to the network, wherein the remote information handling system is suitable for receiving the uploaded data from the information handling system.

11. The system of claim 1, wherein the network is the INTERNET.

12. A method for remotely determining a user's out-of-box experience with a user information handling system, comprising:
providing the user information handling system with the capability of detecting data related to the user's interactions with the user information handling system;
initializing the user information handling system including user interaction detecting capability, by the user;
detecting data related to the user's interactions with the information handling system during initialization;
compiling the detected user interaction data;
uploading the user interaction data to a network;
communicating user interaction data to a remote information handling system.

13. The method of claim 12, further comprising offering an incentive to upload user interaction data.

14. The method of claim 12, wherein uploading user interaction data is conducted automatically.

15. The method of claim 12, wherein uploading user interaction data is initiated by the user.

16. The method of claim 12, wherein detecting the user's interactions with the information handling system is conducted as a background operation.

17. The method of claim 12, wherein uploading compiled user interaction data is conducted after at least one of an initial boot-up, after a specific number of boot operations, and a time period.

18. The method of claim 12, further comprising surveying the user about information regarding at least one of demographic data and user opinion.

19. The method of claim 18, further comprising correlating survey information with user interaction data.

20. A method, comprising:
detecting an initialization of a user when the user sets up a user information handling
system;
saving the initialization activity detected in said detecting step to a file;
uploading the file to an originator of the user information handling system wherein
the initialization activity of the user is correlated by the originator.

21. A method as claimed in claim 20, further comprising the step of correlating the initialization activity of the user, determining whether a change in the initialization is needed, and, in the event a change is needed, modifying an initialization process for new information handling systems in response to the analyzed initialization activity of the user.

22. A software system for remotely detecting a user's out-of-box experience, comprising:
a computer-readable medium containing;
a first software program capable of causing a user information handling system to perform a function; and
a second software program capable of causing the user information handling system to detect and compile the user's initial interactions with the information handling system performing the first software program; wherein the second software program is a background application; and wherein the second software program is capable of causing the user information handling system to upload the compiled data to a remote information handling system.

23. An apparatus, comprising:
means for detecting an initialization activity of a user when the user initializes an information handling system;
means for saving the initialization activity detected by said monitoring means to a file; and
means for uploading the file to an originator of the user information handling system wherein the initialization activity of the user is correlated by the originator.

24. An apparatus as claimed in claim 23 wherein the originator correlates the initialization activity of the user so that a future system can be configured in response to the correlated initialization activity of the user.
